# FASCICULE DE BREVET EUROPEEN

(11) **EP 2 513 275 B1**
(45) Date de publication et mention de la délivrance du brevet: **21.10.2015**
(21) Numéro de dépôt: 10809078.8
(22) Date de dépôt: 14.12.2010
(51) Int. Cl.: C10M 169/04, C09K 8/34, C10N 20/02, C10N 30/02, C10N 30/06, C09K 8/64

(54) **COMPOSITION LUBRIFIANTE BIODEGRADABLE ET SON UTILISATION DANS UN FLUIDE DE FORAGE**
BIOLOGISCH ABBAUBARE SCHMIERMITTELZUSAMMENSETZUNG UND IHRE VERWENDUNG FÜR EIN BOHRFLUID
BIODEGRADABLE LUBRICATING COMPOSITION AND USE THEREOF IN A DRILLING FLUID

(30) Priorité: 15.12.2009 FR 0959018
(43) Date de publication de la demande: 24.10.2012
(73) Titulaire: TOTAL MARKETING SERVICES, 92800 Puteaux (FR)
(72) Inventeur: ESPAGNE, Bernard, Jean-Luc, F-64000 Pau (FR); LAMRANI-KERN, Samia, F-94170 Le Perreux Sur Marne (FR); RODESCHINI, Hélène, F-69003 Lyon (FR)
(74) Mandataire: Hirsch & Associés
(86) Numéro de dépôt international: PCT/IB2010/055791
(87) Numéro de publication internationale: WO 2011/073893

(56) Documents cités:
- EP-A1- 0 652 271
- EP-B1- 1 282 675
- WO-A1-01/94495
- FR-A1- 2 185 672

## Description

La présente invention concerne une composition lubrifiante biodégradable, destinée notamment à être incorporée comme phase huile à haut pouvoir lubrifiant dans un fluide ou boue de forage.

L'invention concerne également l'utilisation de cette composition comme phase continue huile d'un fluide ou boue de forage pétrolier en émulsion inverse, qui convient particulièrement bien à des forages très enfouis, dits offshore en eau profonde et/ou à des forages déviés ou à long déport.

Certains chantiers, comme les grands travaux de génie civil, nécessitent de grandes quantités de lubrifiants, qui sont susceptibles d'être rejetés en partie dans l'environnement. C'est le cas, notamment, des fluides et boues de forage.

Le forage occupe une place primordiale dans l'exploitation pétrolière avec une tendance à opérer des forages de plus en plus profonds. La technologie des forages est en constante évolution, que ce soit sur terre ou dans les fonds marins, en particulier dans ce qui est appelé l'offshore profond, mais aussi, plus récemment, dans les forages horizontaux ou déviés, où, par des inclinaisons successives d'un ou deux degrés, la trajectoire du puits s'incurve, ce qui permet d'atteindre des déports horizontaux au moins supérieurs à un kilomètre voire à plus de dix kilomètres, par rapport à la tête du puits.

Les forces de frottement qui s'exercent sont donc de plus en plus importantes, d'où l'importance accrue des propriétés lubrifiantes du fluide de forage.

De façon connue, la technique de forage utilise un trépan fixé à l'extrémité de tiges de forage, qui, entraîné en rotation, creuse le puits en broyant les roches.

A mesure de l'avancement du forage, des trépans de diamètre de plus en plus faibles sont utilisés et, à chaque étape le puits est consolidé par un tube en acier appelé "casing", qui est descendu à l'intérieur du trou, puis fixé par du ciment.

Pendant le forage, un fluide de forage est mis en circulation, avec injection dans le trépan et expulsion de celui-ci dans la zone de contact avec la roche, puis remontée jusqu'au sommet du puits par le volume annulaire séparant les tiges de forage du « casing ».

Ce fluide remplit en général les fonctions principales suivantes :
- refroidissement du trépan,
- diminution des forces de frottement métal-métal, entre le "casing" et les tiges de forage, et des forces de frottement métal-roche, tant au niveau du trépan que dans la zone annulaire, car le fluide remonte chargé des particules de roche broyée, dites "cuttings" dans la technique,

- évacuation des déblais de roche vers l'extérieur,
- création d'une pression sur les parois du trou, pour empêcher leur affaissement, et
- équilibrage des pressions entre le fond du puits et la surface, afin de maintenir le contrôle du puits et d'éviter une explosion (en anglais, "blow out")

Dans le cas des forages offshore en eau profonde, les températures de l'eau rencontrées, proches de 4 à 5°C, nécessitent une bonne maîtrise de la viscosité des fluides de forage à ces basses températures.

Différents types de fluides ou boues de forage ont été utilisés dans le passé, tels que les fluides à l'eau, contenant de l'eau et des additifs pour augmenter la viscosité, les fluides à l'huile, et les émulsions du type eau dans huile ou émulsions inverses ou du type huile dans eau, comme décrit en particulier dans US 2.816.073. Ce document indique que la phase huile peut être constituée par différentes fractions hydrocarbonées, comme des coupes kérosène et gazoles et des coupes pétrolières fortement alkylées et ramifiées.

Dans les boues à l'eau (Water Base Mud en anglais en abrégé WBM), le fluide de forage est de l'eau ; les boues à l'eau sont en général réservées aux applications peu techniques et aux forages onshore (sur terre), ou offshore très peu profond (quelques mètres).

Dans les boues à huile (Oil Base Mud en anglais, en abrégé OBM), le fluide de forage est un fluide hydrocarboné choisi parmi différents composés disponibles sur le marché.

On classe ces fluides de forage à l'huile en 3 grandes catégories :
* le Groupe I comprend les fluides de forage fortement aromatiques contenant de 5 à 30 % de composés mono-aromatiques et/ou poly-aromatiques issus du raffinage des pétroles bruts, c'est-à-dire les gazoles et les huiles minérales conventionnelles ;
* le Groupe II comprend les fluides de forage modérément aromatiques issus du raffinage pétrole brut et contenant de 0,5 à 5% de composés mono-aromatiques et/ou poly-aromatiques comme les huiles minérales non conventionnelles ou faiblement hydrotraitées souvent appelées LTMO (Low Toxicity Mineral Oil ou huile minérale à basse toxicité) ;
* enfin, le Groupe III comprend les fluides de forage faiblement aromatiques, c'est-à-dire contenant moins de 0,5 % d'aromatiques totaux dont moins de 10 ppm de poly-aromatiques. Ces fluides sont en général issus de synthèses chimiques ou de coupes raffinées sévèrement hydrotraitées, hydrocraquées ou hydroisomérisés. Ils peuvent également être composés de paraffines synthétiques issues du procédé Fisher Tropsch, d'oléfines polymérisées (Internal Olefines ou 10, Alpha Oléfines linéaires ou LAO, et Poly Alpha Oléfines ou PAO), ainsi que d'esters.

Les fluides du Groupe III sont dits synthétiques conformément à la définition du Protocole OSPAR conformément à la Décision 2000/3 « on the Use of Organic-Phase Drilling Fluids (OPF) and the Discharge of OPF-Contaminated Cuttings. » ; ces fluides du Groupe III sont préférés par les opérateurs non seulement pour leur stabilité thermique, leur résistance à l'oxydation, leur faible toxicité liée à leur faible aromaticité, leur caractère non irritant et respectueux de l'environnement mais aussi pour leur respect des exigences de sécurité, notamment par un point éclair élevé et une moindre volatilité.

On sait que l'utilisation de coupes pétrolières (notamment des groupes I ou II) qui ont des teneurs élevées en composés aromatiques dans des boues de forage présente des risques élevés de toxicité, en particulier pour la vie marine, si l'on choisit leur rejet en mer, dans le cas par exemple des forages offshore.

Le dépôt de quantités importantes de ces produits sur les fonds marins a conduit les pays riverains à adopter des législations de plus en plus strictes, obligeant les opérateurs des forages pétroliers offshore, notamment, en mer du Nord, à rechercher des produits aussi biodégradables et non-toxiques que possible.

Dans EP 667 890, est décrit un fluide de forage ayant une phase huile continue constituée d'un mélange de n-alcanes ayant entre 10 et 20 atomes de carbone, essentiellement exempt d'autres types d'hydrocarbures. Or, on constate que ce fluide a un point d'écoulement trop élevé pour une utilisation dans une zone à basse température, typiquement inférieure ou égale à 5°C.

Des esters à base d'acides monocarboxyliques saturés (notamment en C12-C14) ou insaturés et d'alcools monofonctionnels ont été proposés comme phase huile dans des boues de forage en émulsion inverse, notamment, dans EP 374.671, EP 374.672 et EP 386.636.

D'autres composés synthétiques, tels que les PAO (polyalpha-oléfines) ou LAO (alpha-oléfines linéaires), obtenue par oligomérisation d'oléfines, peuvent également être utilisée, en mélange avec les composés précédents. Mais ces composés présentent une très mauvaise biodégradabilité, en particulier anaérobie. En outre, l'utilisation de tous ces produits synthétiques augmente de façon considérable le prix de revient des fluides de forage auxquels ils sont incorporés.

EP1.282.675 propose une composition lubrifiante, utilisable notamment comme phase huile d'un fluide de forage en émulsion inverse, présentant des propriétés rhéologiques et un pouvoir lubrifiant adaptés aux conditions sévères d'utilisation de ce fluide, tout en préservant une biodégradabilité tout à fait acceptable ; ce fluide comprend de 60 à 95 % en masse d'une coupe minérale hydrocarbonée substantiellement exempte de composés aromatiques, dont la teneur en n-paraffines est inférieure ou égale à 10 % en poids et la teneur en iso-paraffines supérieure ou égale à 35 % en poids et de 5 à 40 % en masse d'au moins un ester d'acides gras qui est de préférence un ester de 2-éthyl hexanol et d'acides gras de colza.

WO 01/94495 décrit un fluide de puits à base d'huile, stable en température, non éco-toxique et particulièrement adapté au forage haute pression / haute température, comprenant une phase aqueuse dispersée dans une phase continue non miscible et caractérisé en ce qu'il comprend un système émulsifiant comprenant lui-même au moins un superamide alcoxylé, polyalcoxylé ou non alcoxylé, éventuellement en mélange avec un acide gras.

La présente invention concerne une composition lubrifiante, utilisable notamment comme phase huile d'un fluide de forage, présentant des propriétés rhéologiques et un pouvoir lubrifiant particulièrement bien adaptés aux conditions sévères d'utilisation de ce fluide, tout en préservant sa biodégradabilité comprenant un mélange d'une quantité majeure d'une coupe minérale hydrocarbonée pratiquement exempte de composés aromatiques et d'une composition majoritairement composée d'acide(s) gras.

A cet effet, la présente invention a pour objet une composition lubrifiante biodégradable, à base d'huile hydrocarbonée et d'acide(s) gras, caractérisée en ce qu'elle comprend une quantité majeure, comprise entre 99,95 et 90 % en masse, de préférence entre 99 et 95 % en masse, d'une huile hydrocarbonée d'origine minérale et/ou de source renouvelable, animale et/ou végétale, faiblement aromatique, de préférence non-aromatique (teneur en aromatiques mesurée selon IP 391 inférieure ou égale à 1% en masse, de préférence inférieure ou égale à 0,1% en masse), et une quantité mineure, comprise entre 0,05 et 10 %, de préférence entre 1 et 5 % en masse, d'une composition majoritairement d'acide(s) gras monocarboxyliques en C16-C22, saturés et/ou insaturés, en mélange avec des acides résiniques (acides monocarboxyliques polycycliques -notamment tricycliques- insaturés).

Au sens de la présente invention, par composition majoritairement constituée d'acide(s) gras monocarboxylique(s) en C16 à C22, on entend toute composition dont la concentration en acide(s) gras monocarboxylique(s) en C16 à C22 représente de 80 % à 100 % en masse totale de la composition. En général, le reste de la composition comprend des acides gras monocarboxyliques dont la chaîne hydrocarbonée a moins de 16 atomes de carbone et/ou a plus de 22 atomes de carbone. Les compositions majoritairement constituées d'acide(s) gras monocarboxylique(s) en C16 à C22 comprennent des acides résiniques. La concentration en acides résiniques représente de préférence jusqu'à 10 % en masse des acides (acides gras + acides résiniques) d'acide(s) résinique(s) et avantageusement moins de 5 % de la masse totale des acides (acides gras + acides résiniques).

Les compositions majoritairement composées d'acides gras monocarboxyliques en C16-C22 peuvent être obtenues par exemple par hydrolyse d'huiles végétales naturelles et/ou génétiquement modifiées, de graisses animales ; on peut citer les acides gras dérivant des huiles d'arachide, palme, olive, colza, coton, maïs, tournesol, soja, lin, de suif et/ou dérivant de saindoux.

Parmi les acides résiniques, on peut citer les acides abiétique, dihydroabiétique, tétrahydroabiétique, déhydroabiétique, néoabiétique, pimarique, lévopimarique, parastrinique.

Les compositions majoritairement composées d'acides gras et contenant des acides résiniques peuvent être obtenues par distillation de tallöll, sous-produit de la fabrication de la pulpe de bois ; on parle alors de TOFA acronyme anglais de tall oil fatty acids qui se traduit par acides gras de tallöl). Des TOFA sont par exemple commercialisés par la société TOTAL ADDITIFS & CARBURANTS SPECIAUX sous les dénominations commerciales PC 30, PC 31 et PC 32. Dans ces mélanges commerciaux, les acides résiniques représentent en général moins de 10 % en masse et avantageusement moins de 5 % de la masse totale des acides (acides gras + acides résiniques).

Les compositions à base d'acides gras préférées sont d'origine naturelle, c'est-à-dire au sens de la présente invention d'origine végétale et/ou animale et non d'origine fossile.

Les huiles hydrocarbonées faiblement voire non-aromatiques sont en général issues de coupes de produits pétroliers issus de raffineries et leurs procédés d'obtention mettent généralement en oeuvre des procédés de raffinage tels que le fractionnement et la purification qui permettent de diminuer le taux d'aromatiques.

La purification consiste typiquement en hydrodésulfuration et/ou hydrogénation pour réduire la teneur en soufre, dans certains cas, pour éliminer le soufre présent et réduire ou éliminer les composés aromatiques (huiles désaromatisées) et les composés insaturés. Classiquement, les huiles minérales hydrocarbonées aliphatiques sont obtenues à partir de coupes pétrolières vierges ou de coupes issues de procédés de réformage et de distillation qui ont été préalablement hydrodésulfurées et fractionnées. Les huiles minérales désaromatisées sont obtenus à partir de produits hydrodésulfurés, fractionnés et hydrogénés pour saturer les aromatiques présents, l'hydrogénation pouvant avoir lieu avant le fractionnement final.

Les huiles hydrocarbonées faiblement voire non-aromatiques peuvent être d'origine minérale (pétrolières, mais aussi issues du charbon (Coal to Liquid), du gaz (Gas to Liquid)) et/ou de source renouvelable, animale et/ou végétale tel qu'issues de la biomasse (BtL), par exemple de l'hydrotraitement et isomérisation d'esters d'huiles végétales.

Les huiles hydrocarbonées de la composition lubrifiante selon l'invention ont en général des températures d'ébullition dans la gamme allant de 220 à 350°C ; des huiles minérales issues de coupes ayant des plages d'ébullition plus étroite étant en général préférées.

De préférence les compositions lubrifiantes selon l'invention sont liquides à température ambiante.

Le but de la présente invention est donc de proposer des compositions lubrifiantes ayant de bonnes propriétés de biodégradabilité utilisables comme phase huile dans des boues de forage, par exemple en émulsion directe (o/w) ou en émulsion inverse (w/o).

Les avantages apportés par les compositions selon l'invention sont, d'apporter un compromis satisfaisant entre pouvoir lubrifiant et biodégradabilité, en les utilisant pour l'obtention d'une composition lubrifiante incorporée notamment comme phase huile dans un fluide de forage, à un coût optimum par rapport à celui des fluides à base d'huiles synthétiques très spécifiques. Ces compositions permettent également des économies au niveau du prix de revient des fluides de forage formulés avec celle-ci et le maintien à des niveaux relativement bas du point d'écoulement et de la viscosité cinématique à basse température (à moins de 5°C).

De préférence, dans la composition lubrifiante selon l'invention est une coupe hydrocarbonée, par exemple d'origine minérale, composée majoritairement (i-e plus de 50 % en masse) d'hydrocarbures possédant entre 13 et 22 atomes de carbone. En outre, elle présente avantageusement une teneur en composés aromatiques inférieure ou égale à 0,1%, et avantageusement inférieure ou égale à 0,01% en masse.

La composition lubrifiante selon l'invention présente en général un point d'éclair (selon la méthode NF M 07019) supérieur ou égal à 90°C, de préférence supérieur ou égal à 100°C.

La composition lubrifiante selon l'invention possède de préférence une viscosité cinématique à 40°C (selon la méthode NF T 60100) comprise entre 1,8 et 4 mm² /s et, encore plus avantageusement, inférieure à 2,5 mm² /s.

La composition lubrifiante selon l'invention possède un taux de biodégradabilité aérobique supérieur à 20% mesuré selon OECD 306.

Un autre objet de l'invention est l'utilisation de la composition lubrifiante selon l'invention définie précédemment comme phase continue huile d'un fluide ou boue de forage en émulsion inverse, ou comme phase huile dispersée dans une phase aqueuse continue ; dans le cas des émulsions inverses, la phase huile représente en général entre 60 et 90 % en volume du fluide de forage.

Le fluide de forage est en général utilisé en combinaison avec des additifs fonctionnels selon le type d'application de la boue.

Un des principaux additifs fonctionnels de la boue ou du fluide est l'agent alourdissant essentiellement constitué de barite. D'autres additifs peuvent être utilisés en combinaison qui sont les émulsifiants, les agents mouillants, les viscosifiants, des agents réducteurs de filtrats, des agents de particules pour former les filtres à gravier, des agents de soutènement pour maintien des fractures ouvertes de façon hydraulique dans les formations souterraines, comme le carbonate de calcium ou le graphite.

De préférence, la boue ou le fluide de forage selon l'invention comprend de 30 % à 95 % en masse de la composition lubrifiante selon l'invention telle que définie précédemment et de 5 % à 70 % d'additifs fonctionnels de la dite boue.

Les compositions de ces boues varient selon qu'elles seront utilisées comme fluide de forage ou comme fluide de fracturation des formations souterraines. Ces boues ou fluides de forage sont particulièrement appropriés pour des forages offshore en eau profonde.

Les boues de forage peuvent être préparées, par exemple par mélange à température ambiante des divers composants listés précédemment.

Il est également possible de préparer un concentré comprenant huile minérale et d'acides gras et esters de glycérol et d'acides gras tels que définis précédemment contenant plus de 40 % en masse d'acides gras et d'esters de glycérol et d'acides gras (et donc moins de 60 % en masse d'huile minérale hydrocarbonée) par mélange de ces constituants, par exemple à température ambiante, puis lors de la préparation de la boue ou du fluide de forage sur site, d'ajouter de l'huile hydrocarbonée et les autres ingrédients.

Sauf indication contraire, les quantités et les pourcentages indiqués dans les exemples ci-dessous sont des valeurs massiques.

### Exemple 1

5 compositions lubrifiantes ont été préparées en mélangeant à température ambiante une huile minérale hydrocarbonée (plage de distillation : 250-335°C (ISO 3405) ; viscosité cinématique @ 40°C : 3,7 (EN ISO 3104) ; taux d'aromatiques : < 100 ppm (HPLC) ; point éclair : 115°C (EN ISO 2719)) commercialisée par la société Total Fluides sous la dénomination EDC-11 avec un des 5 additifs ci-dessous dans les proportions indiquées dans le Tableau 1.
ADD 1: PC 32 : mélange d'acides gras et d'acides résiniques issu du TOFA (Tall Oil Fatty Acid) commercialisé par la société Total Additifs & Carburants Spéciaux (contenant moins de 10 % d'acides résiniques) (selon l'invention)
ADD 2 : mélanges d'esters de glycérol de TOFA (comprenant majoritairement des monoesters) (ne faisant pas partie de l'invention)
ADD 3 : Naugalube 810 (triéthylcitrate) commercialisé par la société CHEMTURA (ne faisant pas partie de l'invention)
ADD 4 : Ultralube II: alcanolamine commercialisée par la société STAVENGER FLUIDS (ne faisant pas partie de l'invention)
ADD 5 : Versalube : alcanolamine commercialisée par la société MI Swaco (ne faisant pas partie de l'invention)

On réalise un test HFRR (High Frequency Reciprocating Rig) afin d'évaluer la lubrifiance des compositions en reprenant les conditions opératoires de la norme ISO 12156 sauf la durée du test qui est fixée à 120 minutes de frottement et la température du test qui est la température ambiante (25°C). Les résultats sont réunis dans le Tableau 1.

On constate que les additifs ADD 2 (ne faisant pas partie de l'invention), ADD 3 et ADD 4 (comparatifs) ont un comportement assez similaire : avec une rapide diminution du diamètre de l'empreinte lorsque le taux de traitement augmente, pour atteindre un plateau de l'ordre de 200 µm. L'additif ADD 1 (selon l'invention) préféré se différencie des 4 autres, car son efficacité est bien plus importante pour un même faible taux de traitement (de l'ordre de 100 ppm).

**Tableau 1**

| Composition | HFRR WS 1,4 (µm) |
|---|---|
| EDC 95-11 | 532 |
| EDC 95-11 + 40 ppm ADD1 | 526 |
| EDC 95-11 + 100 ppm ADD1 | 216 |
| EDC 95-11 + 500 ppm ADD1 | 186 |
| EDC 95-11 + 1 % ADD1 | 157 |
| EDC 95-11 + 3% ADD1 | 178 |
| EDC 95-11 + 100 ppm ADD 2 | 421 |
| EDC 95-11 + 500 ppm ADD 2 | 156 |
| EDC 95-11 + 1% ADD 2 | 159 |
| EDC 95-11 + 3% ADD 2 | 171 |
| EDC 95-11 + 100 ppm ADD 3 | 513 |
| EDC 95-11 + 500 ppm ADD 3 | 167 |
| EDC 95-11 + 1% ADD 3 | 157 |
| EDC 95-11 + 3% ADD 3 | 185 |
| EDC 95-11 + 100ppm ADD 4 | 519 |
| EDC 95-11 + 500ppm ADD 4 | 170 |
| EDC 95-11 + 1 % ADD 4 | 188 |
| EDC 95-11 + 3% ADD 4 | 183 |
| EDC 95-11 + 100 ppm ADD 5 | 450 |
| EDC 95-11 + 500 ppm ADD 5 | 346 |
| EDC 95-11 + 1% ADD 5 | 195 |
| EDC 95-11 + 1 % ADD 5 | 228 |
| EDC 95-11 + 3% ADD 5 | 339 |

### Exemple 2 mesures de friction avec tribomètre de configuration bague-plan

Comme pour l'exemple 1, on prépare des compositions lubrifiantes contenant un l'additif ADD1 à 1 % (selon l'invention) ou l'additif ADD 5 à 1 ou 3 % (comparatives) et une huile minérale hydrocarbonée (plage de distillation : 220-240°C (ISO 3405) ; viscosité cinématique @ 40°C : 1,9 (EN ISO 3104) ; taux d'aromatiques : 100 ppm (HPLC) ; point éclair : 92°C (EN ISO 2719) commercialisée par la société Total Fluides sous la dénomination EDC-Pearl, on prépare une boue de forage à partir de cette composition.

On immerge dans la boue de forage un tribomètre de configuration bague-plan dans lequel on met en contact une éprouvette plane (18*30*7 mm) animée d'un mouvement linéaire alternatif à faible vitesse et une éprouvette cylindrique (rayon 35 mm) animée d'un mouvement de rotation (0,6 m/s), les 2 éprouvettes sont en acier cémenté de type 42 CD4 et présentent une résistance mécanique comprise entre 900 et 1.100 MPa.

Les boues sont testées à 20°C, 50°C puis 100°C. Elles restent dans le tribomètre pendant une même série de mesure à ces 3 températures. Pendant l'essai, le coefficient de frottement est enregistré au cours du temps, sur une période de 250 s. 3 essais de répétabilité sont réalisés à chaque fois.

On applique le cycle de charge suivant :
* à 20°C : 5 min de rodage à 514 MPa ; 5 min de mesure de coefficient à 152 MPa ;
* 7 min pour monter à 50°C à 54 MPa ; 5 min de mesure de coefficient à 512 MPa ;
* 10 min pour monter à 100°C à 54 MPa ; 5 min de mesure de coefficient à 512 MPa

Les résultats sont réunis dans le Tableau 2. On constate qu'ADD1 permet de réduire de manière significative le coefficient de frottement des boues qu'ADD 5.

**Tableau 2**

| Boue contenant la composition | Coefficient de friction | | |
|---|---|---|---|
| | 20°C | 50°C | 100°C |
| EDC-Pearl + 1 % ADD 1 | 0,080 | 0,080 | 0,085 |
| EDC-Pearl + 1 % ADD 5 | 0,140 | 0,150 | 0,140 |
| EDC-Pearl + 3 % ADD 5 | 0,171 | 0,206 | 0,193 |

### Exemple 3 biodégradabilité

Des essais de biodégradabilité aérobique ont été effectués sur les ADD 1 à 3 seuls et sur l'huile hydrocarbonée EDC 95-11 en suivant le protocole OECD 306 pendant 7 jours et 28 jours. Les résultats de biodégradabilité sont réunis dans le Tableau 3.

**Tableau 3**

| Test de biodégradabilité aérobique | ADD 1 | ADD 2 | ADD 3 | EDC 95-11 |
|---|---|---|---|---|
| OECD 306 | | | | |
| Après 7 jours (%) | 57 | 48 | 13 | |
| Après 28 jours (%) | 75 | 64 | 32 | 77 |

On constate que les résultats sont excellents pour ADD1 et ADD 2 : les pourcentages de biodégradabilité mesurés sont largement supérieurs à certaines exigences réglementaires de 20%, ce qui n'est pas le cas de l'ADD 3 après 7 jours.

### Exemple 4 rhéologie

On mesure le point éclair (NF EN ISO 2719), le point d'écoulement (ASTM D 7346) et la viscosité cinématique @ 40°C (NF EN ISO 3104) de compositions lubrifiantes contenant 500 ppm, 1 % ou 3 % d'additif ADDi (i=1, 2 ou 5) et on les compare à celles de l'huile hydrocarbonée correspondante non additivée. Les résultats sont réunis dans le Tableau 4.

Répétabilités des mesures : pour le point éclair, la répétabilité est R est de 8-10°C. (R = 0.071 x valeur trouvée lors de la mesure) ; pour le point d'écoulement : la répétabilité est de 6°C quelle que soit la valeur mesurée; pour la viscosité, R = 0,082 x (valeur de la mesure + 1)

On constate que l'incorporation d'additif permet d'augmenter légèrement la valeur du point éclair de l'huile ; le point d'écoulement est abaissé en présence de ADD 1 et ce, dès le taux de traitement de 500 ppm.

**Tableau 4**

| Composition lubrifiante | Point éclair (°C) | Point d'écoulement (°C) | Viscosité cinématique @40°C (mm²/s) |
|---|---|---|---|
| EDC 95-11 | 120 | -21 | 3,626 |
| EDC 95-11 + 500 ppm ADD 1 | 123 | -21 | 3,629 |
| EDC 95-11 + 1 % ADD 1 | 125 | -24 | 3,676 |
| EDC 95-11 + 3% ADD 1 | 125 | -24 | 3,779 |
| EDC 95-11 + 500 ppm ADD 2 | 121 | -24 | 3,628 |
| EDC 95-11 + 1% ADD 2 | 124 | -21 | 3,686 |
| EDC 95-11 + 3% ADD 2 | 123 | -21 | 3,834 |
| EDC 95-11 + 500 ppm ADD 5 | 118,5 | -31 | 3,678 |
| EDC 95-11 + 1 % ADD 5 | 118,5 | -24 | 3,751 |
| EDC 95-11 + 3% ADD 5 | 116,5 | -33 | 3,904 |

Pour les compositions lubrifiantes additivées à 1 % avec ADD 1 et ADD 2 du Tableau 4 on évalue les variations de viscosité cinématique en fonction de la température (NF EN ISO 3104) ainsi que pour une composition additivée avec 1 % de ADD3. Les résultats sont réunis dans le Tableau 5 ainsi que celles de l'huile correspondante non additivée.

**Tableau 5**

| Température (°C) | Viscosité cinématique, mm²/s | | | |
|---|---|---|---|---|
| | EDC 95-11 | EDC 95-11 + 1% ADD1 | EDC 95-11 + 1% ADD2 | EDC 95-11 + 1% ADD3 |
| 0 | 11,47 | 11,72 | 11,74 | 11,45 |
| 10 | 8,003 | 8,154 | 8,161 | 7,953 |
| 20 | 5,910 | 5,994 | 5,998 | 5,879 |
| 30 | 4,510 | 4,582 | 4,593 | 4,486 |
| 40 | 3,569 | 3,622 | 3,614 | 3,555 |
| 50 | 2,903 | 2,950 | 2,938 | 2,894 |
| 60 | 2,412 | 2,445 | 2,465 | 2,403 |
| 70 | 2,06 | 2,083 | 2,071 | 2,035 |
| 80 | 1,768 | 1,782 | 1,778 | 1,752 |
| 90 | 1,542 | 1,552 | 1,550 | 1,530 |
| 100 | 1,355 | 1,369 | 1,370 | 1,349 |

On constate que la présence d'additif de lubrifiance, à hauteur de 1 % masse dans le fluide, n'a pas d'impact sur la variation de viscosité.

On prépare des compositions lubrifiantes avec 1 % d'un des ADD 1 à ADD 3 et une huile minérale hydrocarbonée (plage de distillation : 230-270°C (ISO 3405) ; viscosité cinématique @ 40°C : 2,3 (EN ISO 3104) ; taux d'aromatiques : <10 ppm (HPLC) ; point éclair : 100°C (EN ISO 2719)) commercialisée par la société Total Fluides sous la dénomination EDC-99 DW) Les résultats sont réunis dans le Tableau 6 ainsi que celles de l'huile correspondante non additivée.

On constate qu'aux températures élevées, la viscosité n'est pas influencée par la présence d'additif de lubrifiance alors qu'aux plus faibles températures, l'écart de viscosité entre l'huile vierge et l'huile additivée peut atteindre 8%.

**Tableau 6**

| Température (°C) | Viscosité cinématique, mm²/s | | | |
|---|---|---|---|---|
| | EDC 99 DW | EDC 99 DW + 1% m ADD1 | EDC99DW+1%m ADD2 | EDC 99 DW + 1% m ADD3 |
| 0 | 6,01 | 6,531 | 6,53 | 6,494 |
| 10 | 4,484 | 4,794 | 4,834 | 4,717 |
| 20 | 3,500 | 3,747 | 3,739 | 3,666 |
| 30 | 2,799 | 2,983 | 2,986 | 2,921 |
| 40 | 2,303 | 2,444 | 2,439 | 2,396 |
| 50 | 1,937 | 2,047 | 2,045 | 2,008 |
| 60 | 1,654 | 1,743 | 1,741 | 1,709 |
| 70 | 1,446 | 1,507 | 1,505 | 1,481 |
| 80 | 1,261 | 1,330 | 1,316 | 1,300 |
| 90 | 1,125 | 1,168 | 1,164 | 1,157 |
| 100 | 1,005 | 1,047 | 1,043 | 1,030 |

### Exemple 5 stabilité

Afin d"évaluer la stabilité dans le temps des compositions lubrifiantes contentant 1 % d'ADD 1 et soit l'huile EDC 95-11, soit l'huile EDC 99 DW, on place chaque composition lubrifiante dans une fiole tronconique de 50 mL qu'on laisse fermée à température ambiante pendant plusieurs semaines au laboratoire à la lumière. On vérifie si la composition lubrifiante reste stable, homogène et ne démixte pas. Les observations sont rassemblées dans le Tableau 7.

**Tableau 7**

| | T=0 | T + 12 jours | T + 1 mois | T + 2 mois |
|---|---|---|---|---|
| EDC 95-11 + 1% ADD1 | Clair et limpide | Limpide Pas de démixtion | Limpide Pas de démixtion | Limpide Pas de démixtion |
| EDC 99DW + 1% ADD1 | Clair et limpide | Limpide Pas de démixtion | Limpide Pas de démixtion | Limpide Pas de démixtion |

### Exemple 6 essais de friction sur Fann Lubricity Tester

On teste les compositions lubrifiantes en friction sur un banc dédié aux applications de forage pétrolier, le Fann Lubricity Tester, de manière à apprécier la qualité des différents systèmes en termes de lubrifiance. A partir des compositions lubrifiantes, on formule des boues de forage que l'on teste sur un Fann Lubricity Tester.

Les résultats sont réunis dans le Tableau 8 ci-dessous:
On remarque que l'additif ADD 3 n'est pas aussi efficace qu'ADD 1 et ADD 2

**Tableau 8**

| Boue contenant la composition | Coefficient de friction |
|---|---|
| EDC 95-11 + 100 ppm ADD 1 | 0,085 |
| EDC 95-11 + 500 ppm ADD 1 | 0,082 |
| EDC 95-11 + 3 % ADD 1 | 0,072 |
| EDC 95-11 + 100 ppm ADD 2 | 0,084 |
| EDC 95-11 + 500 ppm ADD 2 | 0,08 |
| EDC 95-11 + 3 % ADD 2 | 0,072 |
| EDC 95-11 + 500 ppm A DD 3 | 0,088 |
| EDC 95-11 +3 % ADD 3 | 0,088 |
| EDC 95-11 + 500 ppm ADD 5 | 0,084 |
| EDC 95-11 +3 % ADD 5 | 0,076 |
| EDC95-11 + 100 ppm ADD5 | 0,088 |

## Revendications

1. Composition lubrifiante possédant un taux de biodégradabilité aérobique supérieur à 20% mesuré selon OECD 306, à base d'huile hydrocarbonée et d'acide(s) gras, **caractérisée en ce qu'**elle comprend :
- entre 99,95 et 90 % en masse d'une huile hydrocarbonée d'origine minérale et/ou de source renouvelable, animale et/ou végétale, dont la teneur en aromatiques mesurée selon IP 391 est inférieure ou égale à 1% en masse, et
- entre 0,05 et 10% en masse d'une composition comprenant de 80 à 100 % en masse d'acide(s) gras monocarboxyliques en C16-C22, saturés et/ou insaturés, en mélange avec des acides résiniques.

2. Composition selon la revendication 1, comprenant entre 99 et 95 % en masse d'huile hydrocarbonée dont la teneur en aromatiques mesurée selon IP 391 est inférieure ou égale à 1 % en masse.

3. Composition selon l'une des revendications 1 à 2, comprenant entre 1 et 5 % en masse de composition comprenant de 80 à 100 % en masse d'acide(s) gras monocarboxyliques en C16-C22, saturés et/ou insaturés.

4. Composition selon la revendication 1, dans laquelle la teneur en aromatiques de l'huile hydrocarbonée mesurée selon IP 391 est inférieure ou égale à 0,1 % en masse.

5. Composition selon l'une quelconque des revendications 1 à 4, **caractérisée en ce que** les acide(s) gras monocarboxyliques en C16-C22 sont d'origine naturelle, d'origine végétale et/ou animale.

6. Composition selon la revendication 1, **caractérisée en ce que** l'huile d'origine minérale est d'origine pétrolière et/ou issue du charbon et/ou issue du gaz.

7. Composition selon la revendication 1, **caractérisée en ce que** l'huile de source renouvelable, animale et/ou végétale est issue de la biomasse.

8. Composition selon la revendication 1, dans laquelle l'huile de source renouvelable, animale et/ou végétale est issue de l'hydrotraitement et de l'isomérisation d'esters d'huiles végétales.

9. Composition selon l'une quelconque des revendications 1 à 8, **caractérisée en ce que** l'huile hydrocarbonée de la composition lubrifiante a une température d'ébullition dans la gamme allant de 220 à 350°C.

10. Utilisation de la composition selon l'une des revendications 1 à 9, comme phase huile d'un fluide ou boue de forage.

11. Utilisation selon la revendication 10, comme phase huile d'un fluide ou boue de forage en émulsion directe (o/w) ou en émulsion inverse (w/o).

12. Utilisation selon la revendication 10 ou 11, dans une boue de forage comprenant de 30 % à 95 % en masse de la composition telle que définie dans l'une quelconque des revendications 1 à 8 et de 5 % à 70 % d'additifs fonctionnels de la dite boue.

13. Utilisation de la composition selon l'une des revendications 1 à 9, comme phase huile d'un fluide, comme boue de forage ou comme fluide de fracturation des formations souterraines.

## Patentansprüche

1. Schmiermittelzusammensetzung, die eine aerobe biologische Abbaurate von mehr als 20 % gemessen nach OECD 306 aufweist, enthaltend Kohlenwasserstofföls und Fettsäure(n), **dadurch gekennzeichnet, dass** sie folgendes umfasst:
- zwischen 99,95 und 90 Massenprozent eines Kohlenwasserstofföls mineralischen Ursprungs und/oder aus einer erneuerbaren tierischen und/oder pflanzlichen Quelle, wobei der Gehalt an Aromaten gemessen nach IP 391 kleiner oder gleich 1 Massenprozent ist
sowie
- zwischen 0,05 und 10 Massenprozent einer Zusammensetzung, die 80 bis 100 Massenprozent gesättigte und/oder ungesättigte C16-C22 monocarboxyl Fettsäure(n), im Gemisch mit Harzsäuren.

2. Zusammensetzung nach Anspruch 1, die zwischen 99 und 95 Massenprozent Kohlenwasserstofföl umfasst, dessen Gehalt an Aromaten gemessen nach IP 391 kleiner oder gleich 1 Massenprozent ist.

3. Zusammensetzung nach einem der Ansprüche 1 bis 2, die zwischen 1 und 5 Massenprozent einer Zusammensetzung umfasst, die 80 bis 100 Massenprozent, gesättigte und/oder ungesättigte, C16-C22 monocarboxyl Fettsäure(n), umfasst.

4. Zusammensetzung nach Anspruch 1, deren Gehalt an Aromaten des Kohlenwasserstofföls gemessen nach IP 391 kleiner oder gleich 0,1 Massenprozent ist.

5. Zusammensetzung nach einem der Ansprüche 1 bis 4, **dadurch gekennzeichnet, dass** die C16-C22 Monocarboxylfettsäure(n) natürlichen Ursprungs, pflanzlichen Ursprungs und/oder tierischen Ursprungs ist (sind).

6. Zusammensetzung nach Anspruch 1, **dadurch gekennzeichnet, dass** das Öl mineralischen Ursprungs aus Erdöl stammt und/oder aus Kohle und/oder aus Gas hervorgeht.

7. Zusammensetzung nach Anspruch 1, **dadurch gekennzeichnet, dass** das Öl aus einer erneuerbaren tierischen und/oder pflanzlichen Quelle aus der Biomasse hervorgeht.

8. Zusammensetzung nach Anspruch 1, wobei das Öl aus einer erneuerbaren tierischen und/oder pflanzlichen Quelle aus der Hydrobehandlung und Isomerisierung von Estern aus Pflanzenölen hervorgeht.

9. Zusammensetzung nach einem der Ansprüche 1 bis 8, **dadurch gekennzeichnet, dass** das Kohlenwasserstofföl der Schmiermittelzusammensetzung eine Siedetemperatur in einer Bandbreite von 220 bis 350 °C aufweist.

10. Verwendung der Zusammensetzung nach einem der Ansprüche 1 bis 9 als Ölphase einer Flüssigkeit oder eines Bohrschlamms.

11. Verwendung nach Anspruch 10 als Ölphase einer Flüssigkeit oder eines Bohrschlamms als direkte Emulsion (o/w) oder als inverse Emulsion (w/o).

12. Verwendung nach Anspruch 10 oder 11 in einem Bohrschlamm, der 30 bis 95 Massenprozent der in einem der Ansprüche 1 bis 8 definierten Zusammensetzung umfasst und 5 bis 70 % funktionelle Zusätze des Bohrschlamms.

13. Verwendung der Zusammensetzung nach einem der Ansprüche 1 bis 9 als Ölphase einer Flüssigkeit, als Bohrschlamm oder als Frackingflüssigkeit unterirdischer Formationen.

## Claims

1. A lubricant composition having an aerobic biodegradability rate of more than 20% measured according to OECD 306, based on a hydrocarbon oil and on fatty acid(s), **characterized in that** it comprises :
- between 99.95 and 90% by mass of a hydrocarbon oil of mineral origin and/or from a renewable animal and/or plant source, having an aromatic content measured according to IP 391 less than or equal to 1% by mass and
- between 0.05 and 10% by mass of a composition comprising from 80 to 100 % by mass of saturated and/or unsaturated C₁₆-C₂₂ monocarboxylic fatty acid(s), in mixture with resin acids.

2. The composition according to claim 1, comprising between 99 and 95 % by mass of hydrocarbon oil having an aromatic content measured according to IP 391 less than or equal to 1% by mass.

3. The composition according to any one of claims 1 to 2, comprising between 1 and 5% by mass of the composition comprising from 80 to 100 % by mass of saturated and/or unsaturated C₁₆-C₂₂ monocarboxylic fatty acid(s),

4. The composition according to claim 1, in which the aromatic content of the hydrocarbon oil measured according to IP 391 is less than or equal to 0.1% by mass.

5. The composition according to any of claims 1 or 4, **characterized in that** the C₁₆-C₂₂ monocarboxylic fatty acid(s) are of natural origin, of plant and/or animal origin.

6. The composition according to claim 1, **characterized in that** the oil of mineral origin is from petroleum and/or from coal and/or from gas.

7. The composition according to claim 1, **characterized in that** the oil of a renewable animal and/or plant source is from biomass.

8. The composition according to claim 1, in which the oil of a renewable animal and/or plant source is from the hydrotreatment and isomerization of vegetable oil esters.

9. The composition according to any of claims 1 to 8, **characterized in that** the hydrocarbon oil of the lubricant composition has a boiling temperature in the range from 220 to 350°C.

10. The use of the composition according to any of claims 1 to 9 as an oil phase of a drilling fluid or mud.

11. The use according to claim 10 as an oil phase of a drilling fluid or mud as a direct emulsion (o/w) or as a reverse emulsion (w/o).

12. The use according to claim 10 or 11, in a drilling mud comprising from 30% to 95% by mass of the composition as defined in any of claims 1 to 8 and from 5% to 70% of functional additives of said mud.

13. The use of the composition according to any of claims 1 to 9 as an oil phase of a fluid, as a drilling mud or as a fluid for fracture of underground formations.
